**Europäisches Patentamt**

**European Patent Office**

**Office européen des brevets**

(19)

(11) Numéro de publication: **0 135 404 B1**

(12) **FASCICULE DE BREVET EUROPEEN**

(45) Date de publication du fascicule du brevet:
12.04.89

(21) Numéro de dépôt: 84401402.7

(22) Date de dépôt: 03.07.84

(51) Int. Cl.⁴: **C 09 G 1/12,** C 09 D 3/393, C 08 J 7/04

(54) Procédé de traitement de la surface d'une couche transparente ayant des propriétés d'antilacération.

(30) Priorité: 04.07.83 FR 8311056

(43) Date de publication de la demande:
**27.03.85 Bulletin 85/13**

(45) Mention de la délivrance du brevet:
**12.04.89 Bulletin 89/15**

(84) Etats contractants désignés:
**BE DE FR GB IT LU NL SE**

(56) Documents cités:
WO-A-80/01386
FR-A- 2 251 608
GB-A- 728 733
US-A- 3 393 078
US-A- 3 971 864

(73) Titulaire: **SAINT-GOBAIN VITRAGE, Les Miroirs 18, avenue d'Alsace, F-92400 Courbevoie (FR)**
(84) Etats contractants désignés: **BE FR GB IT LU NL SE**

(73) Titulaire: **VEGLA Vereinigte Glaswerke GmbH, Viktoriaallee 3-5, D-5100 Aachen (DE)**
(84) Etats contractants désignés: **DE**

(72) Inventeur: **Raedisch, Helmer, Nizzaallee 36, D-5100 Aachen (DE)**
Inventeur: **Esser, Günther, Bardenbergerstrasse 20, D-5120 Herzogenrath (DE)**

(74) Mandataire: **Muller, René et al, SAINT-GOBAIN RECHERCHE 39, quai Lucien Lefranc, F-93304 Aubervilliers (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne le traitement de la surface d'une couche ayant des propriétés d'antilacération et d'autocicatrisation comprenant essentiellement un polyuréthane transparent à réseau tridimensionnel, utilisée en tant que couche externe dans un vitrage feuilleté. Plus particulièrement, l'invention concerne le dépôt sur la surface à traiter d'une solution ou d'une émulsion de cire comprenant en outre une huile de silicone et éventuellement un agent de polissage à grains fins, suivi, le cas échéant, d'un lissage de la couche de cire déposée.

Par couche ayant des propriétés d'antilacération on entend une couche qui en cas de bris d'un vitrage en verre, résiste au déchirement et recouvre les arêtes vives du verre évitant ainsi des coupures et blessures aux occupants d'un véhicule par exemple. Par couche ayant des propriétés d'autocicatrisation, on entend une couche à la surface de laquelle les éraflures accidentelles ou les compressions locales disparaissent rapidement, c'est-à-dire une couche résistante à la rayure et à l'abrasion.

Lorsque la couche transparente de polyuréthane recouvre une feuille de verre, elle remplit à la fois le rôle de protection contre les lacérations (antilacération) et elle doit résister elle-même à la rayure (autocicatrisation). Lorsque la couche transparente recouvre une feuille de matière plastique elle joue essentiellement le rôle de protection contre les rayures (autocicatrisation).

Le brevet US 3 971 864 décrit le revêtement, par une couche de cire, d'une couche ayant des propriétés d'antilacération comprenant un polyuréthane, recouvrant un vitrage en verre de silicate, la couche de cire étant lissée après revêtement. Ce traitement s'applique par exemple à des couches de polyuréthane ayant des propriétés d'antilacération, décrites dans le brevet US 3 808 077. Ces polyuréthanes sont formés à partir de composants à faible poids moléculaire qui au cours du temps diffusent vers la surface libre de la couche antilacération et forment alors un dépôt gris-blanc. Le traitement de la surface avec une cire empêche la formation de ce dépôt nuisible ou le fait disparaître s'il y était déjà formé.

Les agents de polissage à base de cire utilisés suivant cet état connu de la technique, contiennent comme solvant pour la cire ou la substance cireuse des hydrocarbures aliphatiques et, en outre, pour faciliter le lustrage, des huiles de silicone en quantités diverses.

Il est difficile d'obtenir, par ce procédé, une couche de cire exempte de stries et autres perturbations optiques. Or, il est bien connu qu'après avoir formé un film non uniforme, même un polissage mécanique répété ne peut éliminer complètement les défauts optiques; au mieux il ne peut que les atténuer.

En outre, l'application de la solution ou dispersion de cire décrite dans le brevet US 3 971 864, à d'autres couches ayant des propriétés d'antilacération, en polyuréthane, telles que celles décrites dans la publication de brevet français 2 251 608, conduit à des difficultés nouvelles. Dans ce cas, la surface de la couche de polyuréthane est rayée par la solution de cire.

On connaît aussi d'après les publications de brevet GB 728 733 et US 3 393 078 des compositions de polissage pour carrosseries d'automobiles.

L'invention propose un procédé pour augmenter la résistance à la rayure et à l'abrasion d'une couche transparente ayant des propriétés d'antilacération et d'autocicatrisation constituée d'un polyuréthane à réseau tridimensionnel, utilisée en tant que couche externe dans un vitrage feuilleté en verre et/ou en matière plastique, ce procédé convenant pour différents polyuréthanes à réseau tridimensionnel et n'altérant pas les propriétés optiques du vitrage de sécurité utilisant la couche traitée. Il ne provoque pas notamment la formation de stries à la surface de la couche ayant des propriétés d'antilacération.

Conformément à l'invention, on applique sur ladite couche une solution, une dispersion ou une émulsion de cire ou de substance cireuse comprenant, en outre, une huile de silicone et éventuellement des agents de polissage à grains fins dont le diamètre est compris entre 0,1 et 2 micromètres sous une teneur de 2–30%, le ou les solvants de la ou des cires et/ou des substances cireuses étant constitués d'hydrocarbures ayant un domaine d'ébullition compris entre 40 et 300 °C, la teneur en huile de silicone des solutions, des dispersions ou des émulsions en l'absence d'agents de polissage étant inférieure à 4% en poids alors que cette teneur est de 2 à 10% environ en présence d'agents de polissage à grains fins, les pourcentages étant exprimés en poids par rapport à la solution, dispersion ou émulsion prête à l'emploi, le dépôt étant éventuellement suivi d'un polissage.

En utilisant uniquement comme solvant de l'essence pure dont le point d'ébullition est de 300 °C au maximum, on évite les inconvénients observés et on obtient une couche de cire exempte de perturbations. Simultanément, en réduisant la quantité d'huile de silicone à une concentration maximale de 4% lorsqu'il n'y pas d'agent de polissage ou à une concentration maximale de 10% lorsqu'on utilise un ou plusieurs agents de polissage, on élimine l'influence néfaste de l'huile de silicone.

La solution émulsion ou dispersion de cire peut être appliquée par tout procédé connu. Suivant le procédé d'application choisi, la composition peut être mise sous une forme appropriée pour l'application. Des procédés à pulvérisation qui permettent une application régulière se sont avérés spécialement satisfaisants.

Toute composition de cire appropriée au but de l'invention peut en principe contenir des additifs tels que, par exemple, des antioxydants, des agents stabilisants anti-UV.

Il est également possible d'appliquer, par exemple par un procédé de pulvérisation, des «cires autolustrantes» qui ne nécessitent que peu ou pas de lustrage supplémentaire.

Un avantage particulier de l'invention est que l'apport de la couche de cire réduit le coefficient de frottement de la couche de polyuréthane. De ce fait, la sensibilité de la couche aux dommages superficiels tels que des impressions de surface ou des éraflures est réduite. En particulier, pour des couches de matière plastique ayant des propriétés d'autocicatrisation, qui, lors de déformation, montrent des déformations exclusivement élastiques (les déformations plastiques étant négligeables), la couche de cire peut jouer un rôle essentiel dans la résistance à la rayure, en particulier dans la résistance aux impressions abrasives car on sait d'après la publication allemande 20 58 504 que dans ce cas le coefficient de frottement de leur surface joue un grand rôle.

L'invention est utilisée pour le traitement de surface de couches ayant des propriétés d'antilacération et d'autocicatrisation comprenant essentiellement un polyuréthane à réseau tridimensionnel obtenu par exemple par réaction des composants suivants: isocyanate bifonctionnel comme l'hexaméthylènediisocyanate, de triméthylhexaméthylènediisocyanate, le m-xylylènediisocyanate, le 4,4′-méthylène bis (cyclohexylisocyanate) l'isophoronediisocyanate ou des biurets présentant trois fonctions isocyanates ou plus, des isocyanurates ou dérivés, avec des polyols polyfonctionnels tels que les polyols ramifiés, comme des polyesterpolyols ou des polyétherpolyols obtenus par réaction d'alcools polyfonctionnels comme la glycérine, le triméthylolpropane, l'hexanetriol, le pentaérythritol, le sorbitol ou dérivés avec des diacides aliphatiques comme l'acide adipique ou des éthers cycliques comme l'oxyde d'éthylène, l'oxyde de propylène ou le tétrahydrofurane. Le poids moléculaire des polyols ramifiés est généralement compris entre 250 et 400 et de préférence entre 450 et 2000.

L'invention s'applique de préférence au traitement de la surface de couches obtenues par mélange d'un polyétherpolyol ayant 10,5 à 12% de groupes OH libres, produit résultant d'une condensation d'oxyde de propylène avec du triméthylolpropane (composant 1) et d'un biuret de 1,6-hexaméthylènediisocyanate ayant 21 à 25% de groupes isocyanates (composant 2) et d'un composé organique d'étain utilisé comme catalyseur (composant 3) dans une quantité de moins de 0,1% par rapport au composant 1, le mélange du composant 1 avec le composant 2 se faisant dans un rapport compris entre 0,9 et 1,1. Il a été montré que l'application du nouveau traitement à des couches de polyuréthane comme décrit dans les publications de brevets français 2 251 608 et 2 398 606 permettait d'obtenir des bonnes valeurs des propriétés d'autocicatrisation qui se conservaient après de longues périodes et sous des conditions climatiques très différentes.

Des cires qui conviennent selon l'invention peuvent être des cires fossiles minérales et leurs dérivés, de la cire de lignite et dérivés, de la cire de tourbe; des cires végétales, par exemple de la cire de palme, de la cire de carnauba; des cires d'herbe et de buisson comme de la cire de condelilla, des cires de coton, des cires de fruit comme la cire du Japon; des cires de graminées, comme la cire de canne à sucre; des cires produites par des insectes, par exemple de la cire d'abeille; de la paraffine; de l'ozokérite, de la cire de polyéthylène, des cires de synthèse et des cires d'oxazoline.

Comme huile de silicone, on peut utiliser, en particulier, des huiles qui ont une viscosité comprise entre 100 et 5000 centipoises (mPa) et de préférence entre 300 et 5000 centipoises (mPa). Les huiles qui conviennent particulièrement bien sont l'huile de méthylsilicone, l'huile de phénylsilicone et des produits modifiés à fonction amino.

Comme solvant on utilise avantageusement des hydrocarbures aliphatiques ou aromatiques ayant un point d'ébullition compris entre 100 et 200 °C. Par ailleurs, des hydrocarbures chlorés peuvent également être utilisés comme, par exemple, dans des cas spéciaux, le 1.1.1-trichloréthane ou le perchloroéthylène. Ces solvants sont particulièrement appropriés, par exemple lorsque la couche de cire est appliquée à chaud.

Lorsqu'on utilise des agents de polissage à grains fins, ceci ne doit pas porter préjudice à la qualité optique de la surface du polyuréthane. Ainsi on utilise des agents de polissage particuliers dont le diamètre est compris entre 0,1 et 2 micromètres et de préférence des terres d'argile pour le polissage, des craies naturelles ou préparées par précipitation, des silicates métalliques ou alcalino-terreux.

Le traitement selon l'invention peut être effectué sur la couche avant son assemblage avec le support pour former le vitrage feuilleté. De préférence le traitement est effectué alors que la couche est déjà assemblée, de préférence de façon définitive, avec le support.

Par la suite, il sera décrit des exemples de réalisations de l'invention.

EXEMPLE 1

On prépare une couche d'un polyuréthane à réseau tridimensionnel ayant des propriétés d'antilacération et d'autocicatrisation, par réaction des composants suivants:

– 1000 g d'un polyéther d'un poids moléculaire d'environ 450 obtenu par condensation d'oxyde de propylène-1,2 avec du 2,2-bis (hydroxyméthyl)-1-butanol) et ayant une teneur en groupements OH libres d'environ 10,5 à 12%,

– 10 g de sébaçate de bis (1, 2, 2, 6, 6-pentaméthyl-4-pipéridyle),

– 0,5 g de dilaurate de dibutylétain et

– 1000 g d'un biuret de 1,6-hexaméthylènediisocyanate ayant une teneur en groupement NCO libre de 21 à 25%,

– on mélange ces composants et on dégaze le mélange par agitation sous pression réduite en vue d'éviter la formation de bulles dans la couche de polyuréthane.

On coule le mélange homogène préparé ci-dessus, sur un support plan, à l'aide d'une tête de coulée à racle par exemple, pour former une couche d'environ 0,5 mm d'épaisseur. Lorsque la couche est polymérisée par action de la chaleur par exemple, on coule sur la couche formée, une couche de colle comprenant essentiellement un polyuréthane thermoplastique linéaire. Ce polyuréthane thermoplastique peut être obtenu sous atmosphère d'azote par réaction d'isocyanates sur un polyester. On prépare le polyester dans un réacteur, à partir de 145 parties d'acide adipique et 50 parties d'acide sébacique qu'on fait réagir avec 145 parties d'ε-caprolactone, 120 parties de 2,2-diméthyl-1,3-propanediol et 80 parties de 1,4-butanediol en présence de 25 parties de xylène et de 0,25 partie de dilaurate de dibutylétain et à une température de 180 °C. Après avoir séparé 22,5 parties d'eau de réaction du mélange, on ajoute, comme allongeur de chaîne, 18 parties de 1,4-butanediol et 400 parties de xylol. Après que la température a été abaissée à 80 °C, on ajoute sous agitation vigoureuse, 150 parties de bis (4-isocyanatocyclohexyl) méthane et 50 parties de 3-isocyanatométhyl-3,5,5-triméthylcyclohexyl-isocyanate.

Après élévation de la température à 100 °C on poursuit la polymérisation jusqu'à obtenir un polyuréthane thermoplastique de masse moléculaire d'au moins 40.000 et de préférence supérieure à 50.000. Après refroidissement jusqu'à environ 70 °C, on dilue le mélange avec environ 3000 parties de méthyléthylcétone, puis, à une température d'environ 30 °C, avec environ 3000 parties de tétrahydrofurane, pour former une solution à environ à 10% en poids de polyuréthane.

A l'aide d'une tête de coulée à racle, on coule la solution décrite ci-dessus, sur la couche de polyuréthane à réseau tridimensionnel préalablement préparée. Après évaporation des solvants, l'épaisseur de la couche de colle est d'environ 0,4 mm.

La feuille de matière plastique à deux couches obtenue est alors séparée du support de coulée. Par action de la température et de la pression, la feuille est assemblée avec un support monolithe ou feuilleté en verre ou une plaque de matière plastique.

Après assemblage de la feuille ayant les propriétés d'antilacération et d'autocicatrisation, avec le support, un agent de polissage de composition suivante est appliqué uniformément sur la surface libre de polyuréthane, avec une quantité de 15 g/m² de surface:

3,5% de cire de carnauba
1,5% d'huile de méthylsilicone ayant une viscosité de 300 mPa.s
0,3% d'huile de méthylsilicone ayant une viscosité de 1000 mPa.s
50% d'hydrocarbures aliphatiques ayant un domaine d'ébullition compris entre 100 et 140 °C
44,7% d'hydrocarbures aliphatiques ayant un domaine d'ébullition compris entre 140 et 200 °C.

Après l'évaporation des solvants, on lustre la couche de cire par frottement régulier avec une matière textile douce. On obtient ainsi une couche de cire très uniforme.

On mesure le coefficient de friction suivant une méthode conforme à la norme DIN 53375 ou à la norme ASTM D 1894–75. Alors que le coefficient de frottement de la surface de polyuréthane était de 0,7 à 0,9 avant le traitement à la cire, ce coefficient est abaissé par le traitement à la cire à une valeur de 0,3 à 0,5. De manière correspondante, la résistance à la rayure, mesurée avec l'appareil ERICHSEN, est augmentée d'une valeur comprise entre 25 à 30 p jusqu'à une valeur comprise entre 40 à 55 p. La couche obtenue après traitement est également beaucoup plus résistante à l'abrasion.

EXEMPLE 2

On prépare un vitrage feuilleté comprenant deux feuilles de verre de silicate et une couche intercalaire en polyvinylbutyral d'épaisseur 0,76 mm. Ce vitrage feuilleté est destiné à être utilisé comme pare-brise d'un véhicule à moteur. Sur la face du vitrage feuilleté orientée vers l'habitacle du véhicule, est pressée une couche antilacérante telle que décrite dans l'exemple 1.

Après la mise en place de cette couche antilacérante, on applique une dispersion de cire, dont la composition est indiquée ci-après, de manière uniforme sur sa surface, en quantité de 10 g/m².

7,5% de dérivés de cire de lignite
3,0% d'une huile de méthylsilicone ayant une viscosité de 300 mPa.s
0,4% d'une huile de méthylsilicone ayant une viscosité de 1000 mPa.s
0,5% d'un agent émulsifiant non ionique
0,3% d'un agent émulsifiant anionique
10,0% d'alumine à polir
18,0% d'hydrocarbures ayant un domaine d'ébullition compris entre 100 et 200 °C
Complément à 100% en eau.

Lorsque cet enduit a séché, on lustre la couche de cire. Le coefficient de frottement de la couche antilacération est abaissé après ce traitement dans les mêmes proportions que celles indiquées dans l'exemple 1.

EXEMPLE 3

On prépare une feuille ayant des propriétés d'antilacération comme indiqué à l'exemple 1. On applique cette feuille sur une glace de sécurité faite d'une feuille simple en verre au silicate trempé et on fait passer l'ensemble entre une paire de rouleaux en caoutchouc, ce qui assure une adhésion provisoire, On obtient ensuite l'adhésion définitive de la couche ayant des propriétés d'antilacération à la feuille de verre dans un autoclave moyennant des températures et une pression plus élevées.

Sur la couche, ayant des propriétés d'antilacération fixée sur le verre, est appliquée une solution de cire ayant la composition suivante:
3,5% de cire de candelilla
3,5% d'une huile de méthylsilicone ayant une viscosité de 300 mPa.s
0,5% d'une huile de méthylsilicone ayant une viscosité de 1000 mPa.s

40,0% d'hydrocarbures ayant un domaine d'ébullition comprise entre 100 et 140 °C

52,5% de triméthylbenzène

On pulvérise la solution de cire à chaud, par exemple à une température de 80 °C, sur la couche antilacérante, le vitrage muni de sa couche antilacérante pouvant lui-même être préchauffé à une température comprise entre 50 et 80 °C. De cette manière, le temps nécessaire à l'évaporation du solvant est fortement réduit, de sorte que la couche de cire peut déjà être lustrée peu après son application. Ce traitement permet d'abaisser le coefficient de frottement dans les mêmes proportions que celles indiquées dans les exemples précédents.

EXEMPLE 4

On prépare un vitrage pourvu d'une couche antilacérante comme décrit dans un des exemples précédents. Sur la souche antilacération on applique une dispersion de cire ayant la composition suivante:

6 % d'un dérivé de cire de lignite

2 % d'une cire de paraffine

8,5% d'une huile de méthylsilicone ayant une viscosité de 300 mPa.s

0,7% d'une huile de méthylsilicone ayant une viscosité de 1000 mPa.s

0,5% d'un agent émulsifiant non ionique

0,3% d'un agent émulsifiant anionique

30 % d'alumine à polir

20 % d'hydrocarbures ayant un domaine d'ébullition compris entre 100 et 250 °C

32 % d'eau

L'application s'effectue au moyen d'un pistolet de pulvérisation. Après évaporation des solvants, la couche de cire est lustrée.

EXEMPLE 5

On prépare un vitrage pourvu d'une couche antilacérante comme décrit dans un des exemples précédents. Sur la couche antilacérante on applique une dispersion de cire ayant la composition suivante:

1 % de cire d'oxazoline

2 % de cire de paraffine

3 % de dérivé de cire en lignite

1 % d'un agent émulsionnant cationique

20 % d'hydrocarbures ayant un domaine d'ébullition compris entre 100 et 200 °C

15 % d'hydrocarbures ayant un domaine d'ébullition compris entre 100 et 250 °C

2,5% d'huile de méthylsilicone ayant une viscosité de 300 mPa.s

0,5% d'huile de méthylsilicone ayant une viscosité de 1000 mPa.s

55,0% d'eau

Après évaporation de l'eau et des solvants, la couche de cire est lustrée au moyen d'un chiffon doux.

**Revendications**

1. Procédé pour augmenter la résistance à la rayure et à l'abrasion d'une couche transparente ayant des propriétés d'antilacération et d'autocicatrisation constituée d'un polyuréthane à réseau tridimensionnel, utilisée comme couche externe dans un vitrage feuilleté en verre et/ou en matière plastique, caractérisé en ce que l'on applique sur ladite couche une solution, une dispersion ou une émulsion de cire ou de substance cireuse comprenant, en outre, une huile de silicone et éventuellement des agents de polissage à grains fins dont le diamètre est compris entre 0,1 et 2 micromètres sous une teneur de 2–30%, le ou les solvants de la ou des cires et/ou des substances cireuses étant constitués d'hydrocarbures ayant un domaine d'ébullition compris entre 40 et 300 °C, la teneur en huile de silicone des solutions, des dispersions ou des émulsions en l'absence d'agents de polissage étant inférieure à 4% en poids alors que cette teneur est de 2 à 10% environ en présence d'agents de polissage à grains fins, les pourcentages étant exprimés en poids par rapport à la solution, dispersion ou émulsion prête à l'emploi, le dépôt étant éventuellement suivi d'un polissage.

2. Procédé selon la revendication 1, caractérisé en ce qu'on utilise comme solvant un mélange d'hydrocarbures ayant un domaine d'ébullition compris entre 100 et 200 °C environ.

3. Procédé selon une des revendications 1 à 2, caractérisé en ce que la ou les huiles de silicone ajoutées ont une viscosité comprise entre 100 et 5000 mPa.s et de préférence entre 300 et 5000 mPa.s.

4. Procédé selon la revendication 3, caractérisé en ce que l'huile de silicone utilisée est de l'huile de méthylsilicone, de l'huile de phénylméthylsilicone, un composé de silicone à fonction amine ou leurs mélanges.

5. Procédé selon une des revendications 1 à 4, caractérisé en ce qu'on utilise comme agents de polissage à grains fins des alumines pour le polissage, des craies naturelles ou préparées par précipitation, des silicates métalliques ou des silicates alcalino-terreux.

6. Procédé selon une des revendications 1 à 5, caractérisé en ce qu'on utilise des dispersions de cire avec une teneur en eau allant jusqu'à 50% en poids.

7. Procédé suivant la revendication 6, caractérisé en ce que les dispersions de cire contiennent de 0,5 à 2% d'agents de dispersion ou émulsifiants.

8. Procédé selon une des revendications 1 à 7, caractérisé en ce que le traitement est effectué sur la couche assemblée avec le support pour former le vitrage feuilleté.

9. Application du procédé selon une des revendications 1 à 8 au traitement de couches ayant des propriétés d'antilacération constituées d'un polyuréthane qui est le produit de réaction d'un polyétherpolyol résultant de la condensation d'oxyde de propylène ou de triméthylolpropane et contenant environ 10,5 à 12% de groupes OH libres (composant I) et d'un biuret de 1,6-hexaméthylènediisocyanate ayant de 21 à 25% de radicaux isocyanate (composant II), le rapport en

poids du composant II au composant I étant compris entre 0,9 et 1,1.

10. Couche transparente traitée d'après le procédé selon une des revendications 1 à 8.

## Claims

1. A method of increasing the resistance to scratching and abrasion of a transparent layer having antilaceration and self-healing properties formed of a polyurethane having a three-dimensional network, used as an external layer in a laminated pane of glass and/or plastics material, characterised in that there is applied to said layer a solution, dispersion or emulsion of a wax or a waxy substance comprising, in addition, a silicone oil and optionally polishing agents having fine grains of which the diameter is from 0.1 to 2 micrometers at a content from 2 to 30%, the solvent or solvents of the wax or waxes and/or the waxy substances comprising hydrocarbons having a boiling range from 40 to 300 °C, the content of silicone oil in the solutions, dispersions or emulsions in the absence of polishing agents being not more than 4% by weight and this content being from about 2 to 10% in the presence of fine-grain polishing agents, the percentages being expressed by weight on the solution, dispersion or emulsion ready for use, the deposit optionally being followed by polishing.

2. A method according to claim 1, characterised in that there is used as a solvent a hydrocarbon mixture having a boiling range from about 100 to 200 °C.

3. A method according to claim 1 or 2, characterised in that the silicone oil or oils added have a viscosity from 100 to 5000 mPa.s, preferably from 300 to 5000 mPa.s.

4. A method according to claim 3, characterised in that the silicone oil used is methylsilicone oil, phenylmethylsilicone oil, a silicone compound having an amine function, or a mixture thereof.

5. A method according to any one of claims 1 to 4, characterised in that there are used as fine grain polishing agents alumina for polishing, natural or precipitated chalk, metal silicates or alkaline earth silicates.

6. A method according to any one of claims 1 to 5, characterised in that wax dispersions having a content of water of up to 50% by weight are used.

7. A method according to claim 6, characterised in that the wax dispersions contain from 0.5 to 2% of dispersion agents or emulsifiers.

8. A method according to any one of claims 1 to 7, characterised in that the treatment is carried out on the layer assembled with the support to form the laminated pane.

9. Application of a method according to any one of claims 1 to 8, to treatment of layers having antilaceration properties comprising a polyurethane which is the reaction product of a polyether-polyol resulting from the condensation of propylene oxide or trimethylolpropane and containing about 10.5 to 12% of free –OH groups (component I) and a biuret of 1,6-hexamethylenediisocyanate having from 21 to 25% of isocyanate radicals (component II), the weigth ratio of component II to component I being from 0.9 to 1.1.

10. A transparent layer treated by a method according to any one of claims 1 to 9.

## Patentansprüche

1. Verfahren zur Erhöhung der Kratz- und Abriebfestigkeit einer transparenten selbstheilenden Splitterschutzschicht aus dreidimensional vernetztem Polyurethan, die als äußere Schicht bei einer Verbundglasscheibe aus Glas und/oder aus Kunststoff verwendet wird, dadurch gekennzeichnet, daß auf diese Schicht eine Lösung, eine Dispersion oder eine Emulsion von Wachs oder einer wachsartigen Substanz aufgetragen wird, die unter anderem ein Silikonöl und gegebenenfalls feinkörnige Poliermittel in einer Menge von 2 bis 30% enthält, deren Polierkörner einen Durchmesser von 0,1 bis 2 Mikrometer aufweisen, wobei das bzw. die Lösemittel des Wachses bzw. der Wachse und/oder der wachsartigen Substanzen aus Kohlenwasserstoffen mit einem Siedebereich von 40 bis 300 Grad Celsius bestehen, der Gehalt an Silikonöl der Lösungen, der Dispersionen oder der Emulsionen bei Abwesenheit von Poliermitteln unterhalb von 4 Gew.-% und bei Anwesenheit von feinkörnigen Poliermitteln etwa zwischen 2 bis 10% beträgt, wobei die prozentualen Anteile in Gewichtsprozent bezogen auf die gebrauchsfertige Lösung, Dispersion oder Emulsion bezogen sind ist, und daß dem Auftragsvorgang gegebenenfalls ein Poliervorgang folgt.

2. Verfahren nach Anspruch 1, dadurch gekennzeichnet, daß als Lösungsmittel ein Gemisch aus Kohlenwasserstoffen mit einem Siedebereich von etwa 100 bis 200 Grad Celsius verwendet wird.

3. Verfahren nach Anspruch 1 oder 2, dadurch gekennzeichnet, daß das zugesetzte Silikonöl bzw. die zugesetzten Silikonöle eine Viskosität von 100 bis 5.000 mPa.s, und vorzugsweise von 300 bis 5.000 mPa.s aufweisen.

4. Verfahren nach Anspruch 3, dadurch gekennzeichnet, daß als Silikonöl Methylsilikonöl, Phenylmethylsilikonöl, eine aminofunktionelle Silikonverbindung oder Gemische daraus verwendet werden.

5. Verfahren nach einem der Ansprüche 1 bis 4, dadurch gekennzeichnet, daß als feinkörnige Poliermittel Poliertonerden, natürliche oder durch Fällung hergestellte Kreiden, Metallsilikate oder Erdalkalisilikate verwendet werden.

6. Verfahren nach einem der Ansprüche 1 bis 5, dadurch gekennzeichnet, daß Wachsdispersionen mit einem Anteil von bis zu 50 Gew.-% Wasser verwendet werden.

7. Verfahren nach Anspruch 6, dadurch gekennzeichnet, daß die Wachsdispersionen 0,5 bis 2% Dispergiermittel oder Emulgatoren enthalten.

8. Verfahren nach einem der Ansprüche 1 bis 7, dadurch gekennzeichnet, daß die Behandlung auf der Schicht durchgeführt wird, während diese zur Bildung der Verbundglasscheibe mit der Trägerscheibe verbunden ist.

9. Anwendung des Verfahrens nach einem der Ansprüche 1 bis 8 bei der Behandlung von Splitterschutzschichten aus einem Polyurethan, das das Reaktionsprodukt eines durch Kondensation von Propylenoxid oder von Trimethylolpropan hergestellten Polyetherpolyols mit etwa 10,5 bis 12% freien OH-Gruppen (Komponente I) und eines Biurets von 1,6-Hexamethylendiisocyanat mit 21 bis 25% Isocyanat-Radikalen (Komponente II) ist, wobei das Gewichtsverhältnis der Komponente II zur Komponente I zwischen 0,9 und 1,1 liegt.

10. Transparente Schicht, die nach dem Verfahren nach einem der Ansprüche 1 bis 8 behandelt ist.